# EUROPÄISCHE PATENTSCHRIFT

(11) **EP 1 432 536 B1**
(45) Veröffentlichungstag und Bekanntmachung des Hinweises auf die Patenterteilung: **23.03.2005**
(21) Anmeldenummer: 02774688.2
(22) Anmeldetag: 07.10.2002
(51) Int. Cl.: B21B 38/06, G01L 5/04

(54) **VORRICHTUNG ZUM ERFASSEN DER SPANNUNGSVERTEILUNG VON DURCH BANDZUG BELASTETEN METALLBÄNDERN**
DEVICE FOR DETECTING STRESS DISTRIBUTION OF METAL STRIP LOADED BY BAND TENSION
DISPOSITIF POUR DETERMINER LA DISTRIBUTION DES TENSIONS DANS DES BANDES METALLIQUES SOLLICITEES PAR UNE TRACTION DE BANDE

(30) Priorität: 05.10.2001 DE 10149240; 22.01.2002 DE 10202413
(43) Veröffentlichungstag der Anmeldung: 30.06.2004
(73) Patentinhaber: Sundwig GmbH, 58675 Hemer (DE)
(72) Erfinder: BERGER, Axel, 41564 Kaarst (DE); BERGER, Frank, 32609 Hüllhorst (DE)
(74) Vertreter: COHAUSZ & FLORACK
(86) Internationale Anmeldenummer: PCT/EP2002/011204
(87) Internationale Veröffentlichungsnummer: WO 2003/031089

(56) Entgegenhaltungen:
- DE-A- 4 135 614
- DE-A- 19 616 980

## Beschreibung

Die Erfindung betrifft nach dem Oberbegriff von Anspruch 1 eine Vorrichtung zum Erfassen der Spannungsverteilung von durch Bandzug belasteten Metallbändern (siehe z.B. DE-A 196 16 980). Derartige Vorrichtungen werden beispielsweise eingesetzt, um die beim Kaltwalzen im jeweils verarbeiteten Band auftretenden Belastungen zu messen und daraus Steuersignale für Einrichtungen abzuleiten, welche die Verteilung der auf das Band wirkenden Zugkräfte regeln.

Um die Messung der Spannungsverteilung durchführen zu können, wird das Metallband um die Meßrolle geführt. Die Messung erfolgt dann durch in der Rolle befindliche Kraft-Meßsensoren, mit denen das Band abgetastet wird. Die auf die Meßrolle wirkenden Bandumlenkkräfte führen in der Meßrolle zu Biegespannungen, die eine Verformung des Querschnitts der Meßrolle bewirken.

Ein grundsätzliches Problem bei einer derartigen Erfassung der Spannungsverteilung besteht in der Gefahr einer Beschädigung der Sensoren und darin, daß es zu Verschmutzungen der Meßsensoren kommt. Daher ist seit jeher versucht worden, die Meßsensoren so gegenüber Umgebung abzuschirmen, daß einerseits eine optimale Meßgenauigkeit erreicht und andererseits eine Zerstörung der Sensoren oder eine das Meßergebnis negativ beeinflussende Verschmutzung der Meßsensoren verhindert wird.

Ein Versuch dieser Art ist aus der DE 26 30 410 Al bekannt. Bei dieser Meßrolle sind die Meßsenoren in in die Meßrolle eingeformten Aufnahmen eingesetzt. Zum Schutz der Meßsensoren ist die Meßrolle mit einem aufgeschrumpften Stahlmantel überzogen. Auf diese Weise ist zwar ein umfassender Schutz der Meßsensoren gegen äußere Einflüsse gewährleistet. In der Praxis zeigt sich jedoch, daß die mit der Belastung der Meßrolle im Betrieb einhergehende Verformung der Meßrolle zu Verwölbungen des Stahlmantels führen. Diese Verwölbung verändert unmittelbar das Verformungsverhalten der Meßrolle, so daß die Meßsensoren ein verfälschtes Abbild der tatsächlichen Spannungsbelastung liefern.

Es ist versucht worden, die durch die Ummantelung der Meßrolle verursachten Störungen dadurch zu mildern, daß mehrere Sensoren über den Umfang der Meßrolle verteilt angeordnet und so miteinander verschaltet werden, daß sich die durch die ungleichförmige Verformung von Ummantelung und Meßrolle einstellenden Störsignale zumindest teilweise kompensieren (DE-AS 15 73 407). In der Praxis hat sich jedoch gezeigt, daß sich auch bei einer derartigen Anordnung der Meßsensoren keine Meßsignale erhalten lassen, die den hohen Anforderungen an die Meßgenauigkeit genügen.

Aus diesem Grund ist in der DE 42 36 657 Al vorgeschlagen worden, die in die Meßrolle eingeformte Aufnahme jeweils durch eine als massiver Körper ausgebildete Abdeckung gegenüber der Umgebung abzuschotten, die mit Spiel in der Aufnahme sitzt und auf dem Meßsensor abgestützt ist. Dabei ist die der Umgebung zugeordnete Außenfläche der Abdeckung der Kontur der Meßrolle angepaßt, so daß diese Außenfläche in fertig montierter Stellung im wesentlichen flächenbündig mit der Umfangsfläche der Meßrolle abschließt.

Bei einer solchen Abschottung der Aufnahme werden Störungen sicher umgangen, wie beim voranstehend erläuterten, aus der DE 26 30 410 Al oder der DE-AS 15 73 407 bekannten Stand der Technik nicht zu verhindern sind. Allerdings muß dafür die Gefahr in Kauf genommen werden, daß sich Schmutz in den zwischen der Abdeckung und der sie umgebenden Wandung der Aufnahme notwendig vorhandenen Spalt festsetzt. Diese Schmutzansammlungen behindern die freie Beweglichkeit des Abdeckungskörpers in der Aufnahme, so daß die Meßrolle wiederum nur Meßsignale liefert, die nicht die tatsächlich auf die Meßrolle wirkenden Belastungen wiederspiegeln.

In der DE 196 16 980 Al ist vorgeschlagen worden, der beim voranstehend erläuterten Stand der Technik bestehende Gefahr der Verfälschung des Meßergebnisses dadurch vorzubeugen, daß der zwischen dem Abdeckkörper und den Wandungen der Aufnahme bestehende Spalt mit einem Kunststoff abgedichtet wird. Diese Maßnahme kann jedoch ebenfalls nicht verhindern, daß vom verarbeiteten Band mitgeschleppte Partikel in den Kunststoff gedrückt werden. Sie führen so zu einem Kraftnebenschluß, durch den die Beweglichkeit des Abdeckkörpers eingeschränkt und das Meßergebnis dementsprechend verfälscht wird.

Ausgehend von dem voranstehend erläuterten Stand der Technik bestand die Aufgabe der Erfindung darin, eine Vorrichtung zu schaffen, mit der sich die in einem Metallband auftretenden Spannungen sicher und bei minimierter Gefahr von störenden Einflüssen erfassen lassen.

Diese Aufgabe wird durch eine Vorrichtung zum Erfassen der Spannungsverteilung von durch Bandzug belasteten Metallbändern gelöst, die mit einer Meßrolle, mit mindestens einer in die Meßrolle eingeformten Aufnahme, mit einem Meßsensor, der in der Aufnahme sitzt, mit einem in der Aufnahme steckenden Kraftübertragungselement, welches einen auf den Meßsensor wirkenden Belastungsabsatz, dessen Querschnittsfläche kleiner als der Durchmesser der Aufnahme ist, sowie einen Stützabsatz aufweist, der auf der der Außenseite der Meßrolle zugeordneten Seite des Belastungsabsatzes ausgebildet ist und einen geringeren Durchmesser als der Belastungsabsatz besitzt, und mit einer in die Öffnung der Aufnahme eingepreßten und diese vollständig abdichtenden Abdeckung ausgestattet ist, deren nach außen weisende Oberfläche im wesentlichen flächenbündig zur Umfangsfläche der Meßrolle angeordnet ist und die an dem Stützabsatz des Kraftübertragungselements abgestützt ist.

Gemäß der Erfindung wird die den Meßsensor jeweils aufnehmende Aufnahme durch eine Abdeckung abgedichtet, die unter Pressung in die Öffnung der Aufnehmung eingesetzt ist. Auf diese Weise ist eine gegenüber Partikeln und ähnlichen Verschmutzungen vollständig dichte Abschottung der Aufnahme und des darin angeordneten Meßsensors hergestellt. Gleichzeitig ist dadurch, daß die Abdeckung auf dem Kraftübertragungselement abgestützt und das auf den Meßsensor wirkende Kraftübertragungselement in geeigneter Weise mit der Meßrolle verbunden ist, sichergestellt, daß die auf die Abdeckung wirkenden Kräfte richtig und ohne Verfälschungen durch äußere Einflüsse auf den Meßsensor übertragen und von diesem als exaktes Abbild der tatsächlichen Belastungen an eine Meß- und Regeleinrichtung geliefert werden.

Die Pressung, mit der die Abdeckung in der Öffnung der Aufnahme sitzt, kann problemlos so bemessen werden, daß eine dauerhaft sichere Abdichtung der Aufnahme bei gleichzeitig im wesentlichen fugenlosem Übergang zwischen der Umfangsfläche der Meßrolle und der Abdeckung gewährleistet ist. Auf diese Weise wird einerseits sicher verhindert, daß sich lose Partikel im Bereich der Abdeckung festsetzen, die das Meßergebnis verfälschen könnten. Andererseits ist durch den Preßsitz sichergestellt, daß die Oberfläche des jeweils verarbeiteten Bandes nicht durch Ansammlungen von Schmutzpartikeln auf der Umfangsfläche der Meßrolle beschädigt wird.

Das Einpressen der Abdeckung in die Aufnahme kann in konventioneller Weise dadurch erfolgen, daß die Abdeckung in die Aufnahme eingeschrumpft wird. Alternativ können auch Formelemente, wie Keilschrägen oder ähnliches, vorgesehen werden, um ein mechanisch unterstütztes Einpressen der Abdeckung in die Aufnahme zu erleichtern. Die auf die Abdeckung wirkende Pressung verursacht eine Kraft, durch die der Meßsensor auch im Ruhezustand definiert vorgespannt ist. Daher ist es zweckmäßig, die während des Einpressens der Abdeckung auftretenden Kräfte über den Meßsensor zu erfassen, um so eine eindeutige Aussage über den tatsächlichen Belastungszustand des Sensors im fertig montierten Zustand zu erhalten.

Ein wesentliches Merkmal der Erfindung besteht dabei darin, daß die Abdeckung jeweils über einen Stützabschnitt auf dem Kraftübertragungselement abgestützt ist, dessen Querschnittsfläche kleiner ist als die Querschnittsfläche des Kraftübertragungselements im Bereich des Belastungsabsatzes, über den die Belastung des Meßsensors erfolgt. Auf diese Weise ist sichergestellt, daß die auf die Abdeckung wirkenden Kräfte konzentriert in das Kraftübertragungselement eingeleitet und von diesem auf den Meßsensor übertragen werden. Dies ermöglicht es, den Meßsensor, die Gestalt des Kraftübertragungselements und die Form der Abdeckung so aufeinander abzustimmen, daß ein stets optimal exaktes Meßergebnis erreicht wird.

Gemäß einer ersten Ausgestaltung der Erfindung ist der Meßsensor ringförmig ausgebildet. Mit einem derart ringförmigen Meßsensor lassen sich die im Betrieb der Meßrolle auftretenden Belastungen besonders sicher erfassen.

Dies gilt insbesondere dann, wenn das Kraftübertragungselement einen Schaftabschnitt aufweist, dessen eines Ende fest mit der Meßrolle verbunden ist. Die den Spannungen im um die Meßrolle geführten Band entsprechenden Belastungen der Meßrolle lassen sich so besonders eindeutig erfassen.

Vorzugsweise ist der Belastungsabsatz als um den Schaftabschnitt umlaufender Kragen ausgebildet, so daß der Meßsensor und das Kraftübertragungselement koaxial zueinander angeordnet sein können und der Belastungsabsatz mit seiner von der Außenseite der Meßrolle abgewandten Unterseite auf den Meßsensor wirken kann. Bei dieser Gestaltung und Anordnung des Meßsensors und des Kraftübertragungselements ist sichergestellt, daß die im Betrieb der Meßrolle auftretenden Belastungen hinsichtlich ihrer Wirkrichtung und Verteilung von dem Meßsensor richtig erfaßt werden.

In der Regel ist es für eine einwandfreie Erfassung der Meßsignale erforderlich, das aus Abdeckung, Kraftübertragungselement und Meßsensor gebildete Meßsystem vorzuspannen. Eine diesbezüglich besonders einfach montierbare Ausgestaltung der Erfindung ist dadurch gekennzeichnet, daß die Abdeckung und das Kraftübertragungselement einstückig ausgebildet sind. Auf diese Weise ist es möglich, das Kraftübertragungselement und die Abdeckung gleichzeitig in die Aufnahme einzusetzen. Durch die Tiefe, über die der aus dem Kraftübertragungselement und der Abdeckelement gebildete Körper in die Aufnahme eingeführt wird, läßt sich dann die Kraft exakt einstellen, mit der der Meßsensor vorgespannt wird. Dabei können an der Abdeckung Formelemente, wie beispielsweise ein Vier- oder Sechskantkopf, vorgesehen sein, an die ein Montagwerkzeug angesetzt werden kann. Diese Montagehilfen können nach Abschluß der Montagearbeiten von der Abdeckung so abgetrennt werden, daß ein einwandfreier Übergang von der Umfangsfläche der Meßrolle auf die freie Außenfläche der Abdeckung gewährleistet ist.

Eine mehrteilige Ausführung der aus der Abdeckung und dem Kraftübertragungselement gebildeten Baugruppe hat den Vorteil, daß sich für die Herstellung der Abdeckung und des Kraftübertragungselementes unterschiedliche Werkstoffe verwenden lassen. So kann die Abdeckung aus einem besonders verschleißfesten Material gefertigt werden, während der Schaft aus einem zähen Werkstoff besteht, der besonders gut in der Lage ist, die im Betrieb der Meßrolle auftretenden Belastungen aufzunehmen. Dabei läßt sich eine vereinfachte Montage trotz der Mehrteiligkeit dadurch erreichen, daß der Belastungsabsatz, der Stützabsatz und die Abdeckung einstückig einen Körper bilden, der über einen mit ihm lösbar verbundenen Schaft mit der Meßrolle verkoppelt ist. Zum selben Zweck ist es denkbar, nur die Abdeckung und den Stützabsatz als einstückigen Körper auszubilden, der wiederum lösbar auf dem den Belastungsabsatz tragenden Schaft abgestützt ist.

Die einwandfreie Erfassung der die Spannungsverteilung im untersuchten Band wiederspiegelnden Kräfte der Meßrolle kann zudem dadurch untersützt werden, daß das Kraftübertragungselement Formelemente aufweist, welche eine gerichtete Einleitung von auf die Abdeckung wirkenden Kräften auf das Kraftübertragungselement bewirken. Diese Formelemente können beispielsweise als Kerben, Einsenkungen, Nuten oder ähnliches ausgebildet sein, welche eine gezielte Schwächung des Kraftübertragungselements und / oder der Abdeckung bewirken und eine dementsprechend bevorzugte Verformungsrichtung des Kraftübertragung festlegen.

Wird die Meßrolle in einer stark von Flüssigkeiten, wie Ölen oder vergleichbare Kriecheigenschaften aufweisenden Medien, belasteten Umgebung eingesetzt, so kann der trotz der in die Aufnahme dicht eingepreßten Abdeckung bestehenden Gefahr des Eindringens solcher Flüssigkeiten in die Aufnahme dadurch vorgebeugt werden, daß zwischen dem Kraftübertragungselement und der das Kraftübertragungselement umgebenden Wandung der Aufnahme ein Dichtelement angeordnet ist, durch welches ein zwischen der Abdeckung und dem Dichtelement vorhandener Raum gegenüber dem Meßsensor abgedichtet ist.

Eine weitere vorteilhafte Ausgestaltung der Erfindung besteht darin, daß die Abdeckung mit dem Kraftübertragungselement mittels einer Preßverbindung verbunden ist. Überraschend hat sich herausgestellt, daß auf diese besonders einfach herzustellende Weise sichergestellt werden kann, daß die auf die Abdeckung wirkenden Kräfte richtig und ohne Verfälschungen durch äußere Einflüsse auf den Meßsensor übertragen und von diesem als exaktes Abbild der tatsächlichen Belastungen an eine Meß- und Regeleinrichtung geliefert werden.

Weitere vorteilhafte Ausgestaltungen der Erfindung sind in den abhängigen Ansprüchen angegeben und werden nachfolgend anhand einer ein Ausführungsbeispiel darstellenden Zeichnung näher erläutert. Es zeigen schematisch:
- Fig. 1: eine erste Meßrolle im Querschnitt,
- Fig. 2: eine zweite Meßrolle im Querschnitt,
- Fig. 3a - 3b: drei weitere Varianten von Meßrollen im Querschnitt,
- Fig. 4a - 4e: verschiedene Meßrollen in einem Längs-(linke Hälfte der jeweiligen Figur) und einem Querschnitt (rechte Hälfte der jeweiligen Figur),
- Fig. 5: eine fünfte Meßrolle im Querschnitt.

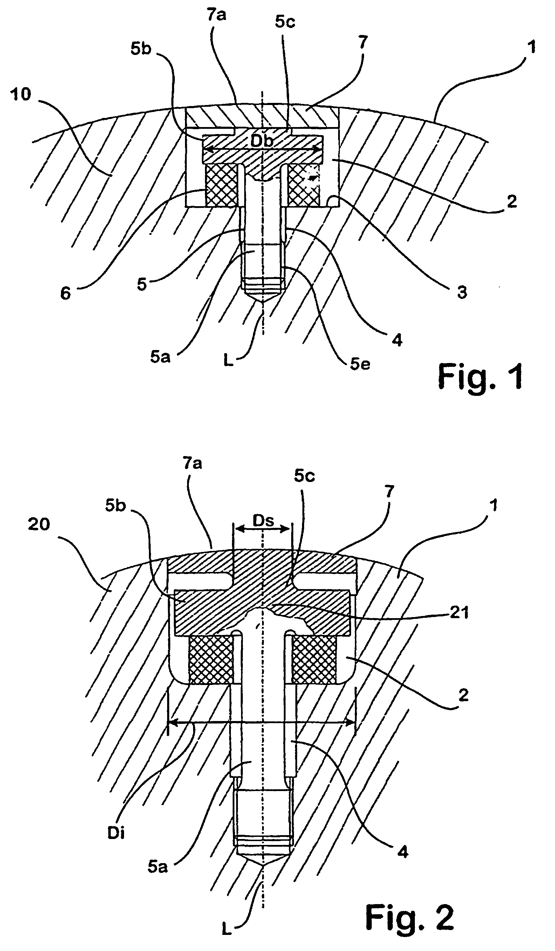

Die in den Figuren 1 bis 5 dargestellten Meßrollen 10, 20, 30, 31, 32, 40 bzw. 50 werden typischerweise in Kaltwalzwerken eingesetzt. Das hier nicht gezeigte, in dem Kaltwalzwerk verarbeitete Stahlband wird dazu über die Umfangsfläche 1 der Meßrollen 10,20,30,31,32,40 und 50 umgelenkt.

Die Meßrollen 10,20,30,31,32,40 und 50 weisen jeweils mindestens eine im Querschnitt kreisförmige, sacklochartig ausgebildete Aufnahme 2, in deren Boden 3 zusätzlich jeweils eine angrenzend an ihren Grund mit einem Innengewinde versehene und koaxial zur Längsachse L der Aufnahme 2 ausgerichtete Bohrung 4 eingeformt ist.

In die Bohrung 4 ist ein Schaft 5a mit einem an seinem einen Ende ausgebildeten Gewindeabschnitt eingeschraubt. An seinem der Öffnung der Aufnahme 2 zugeordneten anderen Ende trägt der Schaft 5a einen Belastungsabsatz 5b, der als um den Schaft 5a umlaufender Kragen ausgebildet ist. Der Durchmesser Db des Belastungsabsatzes 5b ist dabei kleiner als der Innendurchmesser Di der Aufnahme 2.

Auf der wiederum der Öffnung der Aufnahme 2 zugeordneten Oberseite des Belastungsabsatzes 5b ist koaxial zur Längsachse L ein im Querschnitt ebenfalls kreisförmiger Stützabsatz 5c ausgebildet. Der Durchmesser Ds dieses Stützabsatzes 5c ist kleiner als der Durchmesser Db des Belastungsabsatzes 5b, so daß der Stützabsatz 5c eine kleiner Querschnittsfläche als der Belastungsabsatz besitzt.

Der Schaft 5a, der von ihm getragene Belastungsabsatz 5b und der Stützabsatz 5c bilden gemeinsam ein Kraftübertragungselement 5, über das ein ringförmig ausgebildeter, koaxial zur Längsachse L angeordneter Meßsensor 6 belastet wird. Der Meßsensor 6 ist dazu zwischen dem Belastungsabsatz 5b und dem Boden 3 der Aufnahme 2 derart eingespannt, daß der Belastungsabsatz 5b mit seiner von der Öffnung der Aufnahme 2 abgewandten Unterseite auf den Meßsensor 6 wirkt.

Die Öffnung der Aufnahme 2 ist jeweils durch eine kreisrunde, koaxial zur Längsachse L ausgerichtete Abdeckung 7 verschlossen, die in die Aufnahme 2 eingepreßt ist. Die Abdeckung 7 ist dabei an ihrer dem Innenraum der Aufnahme 2 zugeordneten Unterseite auf dem Stützabsatz 5c des Kraftübertragungselementes 5 abgestützt.

Die zwischen der Umfangswandung der Aufnahme 2 und der Abdeckung 7 wirkende Pressung ist derart ausgelegt, daß einerseits ein sicherer Halt der Abdeckung 7 in der Öffnung der Aufnahme 2 unter den im Betrieb der Meßrollen 10, 20, 30, 31, 32, 40 und 50 auftretenden Kräfte gewährleistet ist. Andererseits ist die Abdeckung 7 auf diese Weise mit einer definierten Kraft vorgespannt, die in das Kraftübertragungselement 5 eingeleitet und von diesem auf den Meßsensor 6 übertragen wird.

Der Verlauf der Außenfläche 7a der Abdeckung 7 ist dabei an den Verlauf der Umfangsfläche 1 der jeweiligen Meßrolle 10, 20, 30, 31, 32, 40 und 50 angepaßt, so daß die Abdeckung 7 flächenbündig in die Aufnahme 2 eingepaßt ist und im wesentlichen spaltfrei in die Umfangsfläche 1 übergeht. Die Anpassung der Abdeckung 7 an den Verlauf der Umfangsfläche 1 kann durch eine entsprechende Formgebung schon bei der Herstellung der Abdeckung 7 vorbereitet und nach erfolgter Montage der Abdeckung 7 durch eine spanabhebende Bearbeitung vollendet werden.

Beim in Fig. 1 dargestellten Ausführungsbeispiel ist das Kraftübertragungselement 5 mit seinem Schaft 5a, seinem Belastungsabsatz 5b und seinem Stützabsatz 5c als einstückiger Körper ausgebildet. Die Abdeckung 7 ist demgegenüber in an sich bekannter Weise als selbständiger Körper in die Öffnung der Aufnahme 2 eingeschrumpft. Die nach dem Temperaturausgleich zwischen der Meßrolle 10 und der Abdeckung 7 vorhandene Pressung kann bei unbelasteter Meßrolle 10 vom Meßsensor 6 erfaßt und zur Feststellung eines definierten Ausgangszustands des Meßsensors 6 benutzt werden. Durch die Vorspannung der Abdeckung 7 ist zudem ein sicherer Kontakt zwischen der Unterseite der Abdeckung 7 und dem Stützabsatz 5c gewährleistet.

Beim in Fig. 2 dargestellten Ausführungsbeispiel bilden die Abdeckung 7 sowie das Kraftübertragungselement 5 mit seinem Stützabsatz 5c, Belastungsabsatz 5b und Schaft 5a einen einstückigen Körper 21. Eine gesonderte Vorspannung der Abdeckung 7 ist bei diesem Ausführungsbeispiel nicht erforderlich. Statt dessen kann an der Abdeckung 7 als Montagehilfe ein hier nicht dargestelltes Formelement angeformt sein, an das ein Werkzeug zum Einschrauben des Körpers 21 angesetzt werden kann. Die umlaufenden Randkanten der Abdeckung 7 und / oder der Öffnung der Aufnahme 2 sind in geeigneter Weise abgeschrägt, so daß während des Einschraubens des Körpers 21 seine Abdeckung 7 in die Öffnung der Aufnahme 2 eingepreßt wird. Alternativ oder ergänzend zu einer Abschrägung der Kanten kann das Einpressen der Abdeckung in die Öffnung durch eine Abkühlung des Körpers 21 und eine Erwärmung der Meßrolle 20 unterstützt werden. Nach Fertigstellung der Montage wird die Montagehilfe von der Abdeckung 7 abgetrennt und die Oberfläche der Abdeckung 7 geschliffen, bis ihre Form an die Form der Umfangsfläche 1 angepaßt ist.

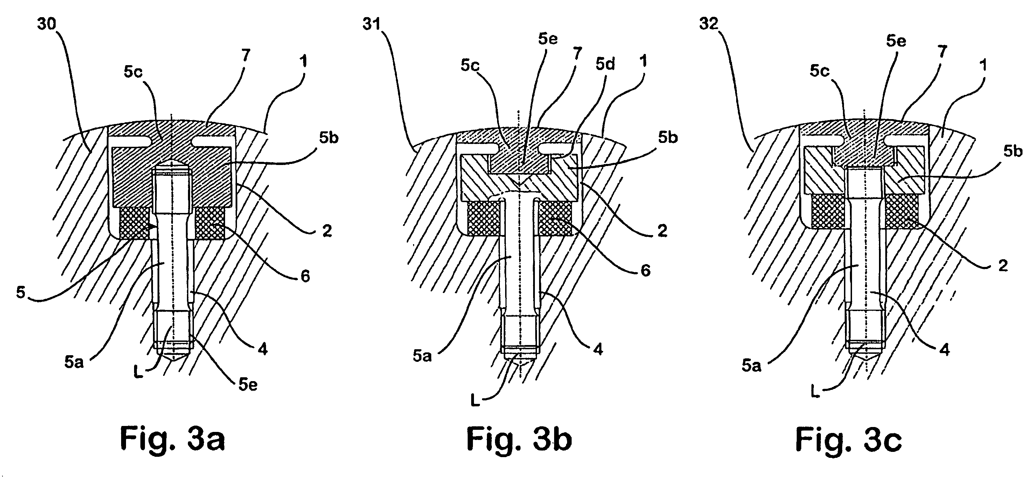

Die Figuren 3a bis 3c zeigen Ausführungsbeispiele, bei denen beispielsweise hinsichtlich der Oberflächenhärte oder -rauhigkeit besondere Anforderungen an die Umfangsfläche der Meßrolle 30,31,32 gestellt werden. Bei diesen Meßrollen 30,31,32 muß dementsprechend auch die in die Öffnung der Aufnahme 2 eingepreßte Abdeckung 7 eine besonders hohe Härte und Verschleißfestigkeit besitzen. Die an die Abdeckung 7 gestellten Anforderungen laufen somit den Anforderungen zuwider, die an den Schaft 5a des Kraftübertragungselementes 5 gestellt werden. Dessen Werkstoff muß eine ausreichende Zähigkeit besitzen, um die auf die Meßrollen 30,31,32 jeweils wirkenden Belastungen sicher auf den jeweiligen Meßsensor zu übertragen.

Um diese entgegengesetzten Anforderungen zu erfüllen, sind bei den in den Figuren 3a bis 3c dargestellten Beispielen die Abdeckung 7 aus einem verschleißfesten, harten Material und mindestens der Schaft 5a des Kraftübertragungselementes 5 aus einem zähen Material gefertigt, welches eine gute Verformbarkeit besitzt und so die Verformungen der Meßrolle besser auf den Meßsensor 6 leitet.

Beim in Fig. 3a dargestellten Ausführungsbeispiel bilden dabei der Belastungsabsatz 5b, der Stützabsatz 5c und die Abdeckung 7 einen Körper, der auf das in Richtung des Öffnung der Aufnahme 2 weisende Ende des Schaftes 5a aufgeschraubt ist. In diesem Beispiel besonders deutlich zu erkennen ist, daß der Schaft 5a in der in den Boden der Aufnahme 2 eingeformten Bohrung 4 über einen weiten Teil seiner Länge frei, d.h. ohne Kontakt mit den Seitenwänden der Bohrung geführt und nur an seinem Endabschnitt fest in der Bohrung 4 gehalten ist. Auf diese Weise kann sich der Schaft 5a bei einer Belastung über eine große Länge verformen.

Beim in Fig. 3b dargestellten Ausführungsbeispiel bilden die Abdeckung 7 mit dem Stützabsatz 5c einerseits und der Schaft 5a mit dem Belastungsabsatz 5b andererseits jeweils einen einstückig ausgebildeten Körper. Dabei ist in die vom Schaft 5a abgewandte Seite des Belastungsabsatzes 5b eine koaxial zur Längsachse L angeordnetes Innengewinde 5d eingeformt, in das ein an den Stützabschnitt 5c angeformter Schraubabschnitt 5e eingeschraubt ist.

Beim in Fig. 3c dargestellten Ausführungsbeispiel bildet wie beim in Fig. 3b gezeigten die Abdeckung 7 mit dem Stützabsatz 5c einen einstückigen Körper, an den ebenso wie beim Ausführungsbeispiel gemäß Fig. 3b ein Schraubabschnitt 5e angeformt ist. Der Belastungsabsatz 5b des Kraftübertragungselementes 5 ist dagegen als selbstständiges, mutternartiges Bauelement ausgebildet, in dessen Stirnseiten jeweils Innengewinde eingeformt sind. In das in Montagestellung obere dieser Innengewinde ist der Schraubabschnitt 5e eingeschraubt, während in das untere Innengewinde das in Richtung der Abdeckung 7 weisende Ende des ein in diesem Fall selbständige Bauelement bildenden Schaftes 5a eingeschraubt ist. Die Abdeckung 7 mit dem Stützabschnitt 5c und dem Schraubabschnitt 5d, der Belastungsabsatz 5b sowie der Schaft 5a bestehen dabei aus unterschiedlichen, an die jeweils wirksamen Belastungen optimal angepaßten Werkstoffen.

Durch eine geeignete Ausformung der Unterseite der Abdeckung 7 läßt sich das Kraftübertragungsverhalten des Kraftübertragungselementes 5 zusätzlich beeinflussen. Besonders einfach läßt sich dies dadurch bewerkstelligen, daß die Abdeckung 7 und das Kraftübertragungselement 5 einen einstückigen Körper 41 bildenden. In diesem Fall läßt sich in den Körper 41 eine umlaufende Nut 42 einformen, durch deren Ausrichtung der Dickenverlauf der Abdeckung 7 bestimmt wird. Der im Bereich dieser Nut verbleibende Kern des Körpers 41 stellt dann den Stützabschnitt 5c dar, über den die Abdeckung 7 abgestützt ist.

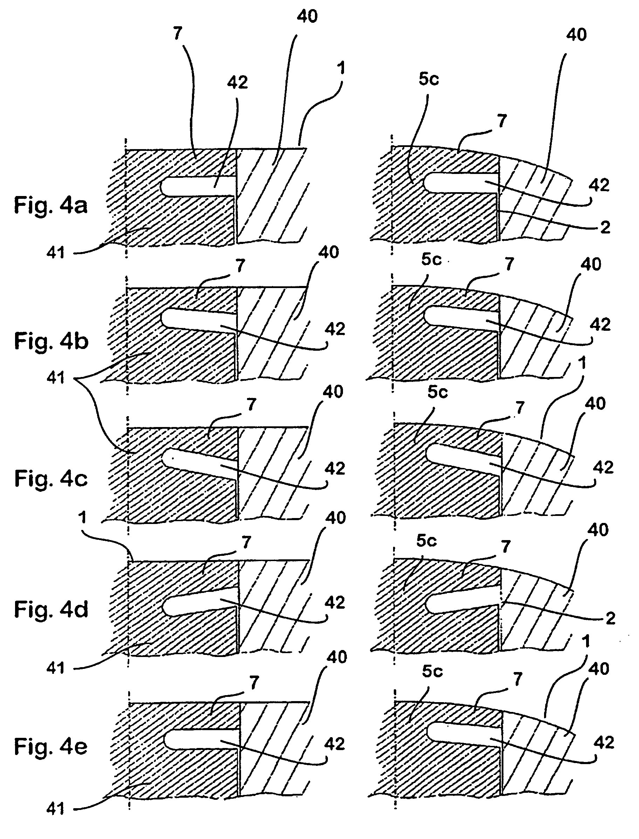

Die Nut 42 kann beispielsweise in Form eines aus radialer Richtung geführten Einstichs erzeugt werden, so daß die Nut 42 im wesentlichen normal zur Längsachse L ausgerichtet ist. In diesem Fall weist die Abdeckung in Achsrichtung der Meßrolle eine konstante Dicke auf, während in Umfangsrichtung ihre Dicke ausgehend vom dünnen Rand zum Stützabschnitt 5c hin zunimmt (Fig. 4a).

Wird die Nut 42 derart unter einem Winkel in den Körper 41 eingebracht, daß sie ausgehend vom Umfang des Körpers in Richtung der Abdeckung 7 ansteigt, so läßt sich eine Abdeckung 7 mit in Umfangsrichtung annähernd konstanter und in Achsrichtung ausgehend vom Stützabschnitt 5c in Richtung des Randes der Abdeckung 7 zunehmender Dicke erzeugen. Die Dickenzunahme ist dabei durch den Winkel bestimmt, unter dem die Nut in den Körper 41 gerichtet ist (Figuren 4b, 4c). In vergleichbarer Weise läßt sich durch eine ausgehend vom Umfang unter einem Winkel von der Abdeckung weg gerichtete Anordnung der Nut 42 eine Abdeckung 7 an dem Körper 41 erzeugen, deren Dicke im über den Stützabschnitt 5c hinausstehenden Bereich sowohl in Achs- als auch in Umfangsrichtung der Meßrolle 2 zunimmt (Fig. 4d).

Schließlich kann durch Einsatz geeigneter CNC-Bearbeitungsmaschinen die Nut 42 so geführt werden, daß eine sowohl in Achs- als auch in Umfangsrichtung konstante Dicke im über den Stützabschnitt 5c hinausstehenden Bereich der Abdeckung 7 erreicht wird.

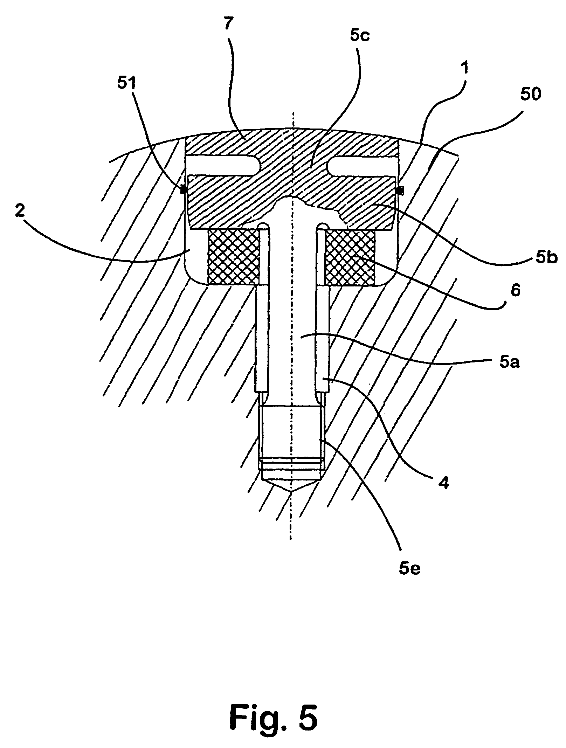

Die in Fig. 5 dargestellte Ausgestaltung entspricht hinsichtlich des einstückigen, durch die Abdeckung 7, den Stützabsatz 5c, den Belastungsabsatz 5b und den Schaft 5a gebildeten Körper dem in Figur 2 dargestellten Ausführungsbeispiel. Zusätzlich ist in die Innenwand der Aufnahme 2 eine umlaufende Nut eingeformt, in der eine Ringdichtung 51 liegt. Die Ringdichtung 51 liegt gleichzeitig an der Umfangsfläche des Betätigungsabsatzes 5b an. Auf diese Weise ist der unterhalb des Betätigungsabsatzes 5b vorhandene Raum gegen das Eindringen von Kriechöl und anderen Flüssigkeiten geschützt, die trotz des fest in die Aufnahme 2 eingepreßten Sitzes der Abdeckung 7 in die Aufnahme 2 eindringen.

### BEZUGSZEICHEN

- 10,20,: Meßrollen
- 30,31,32,: Meßrollen
- 40,50: Meßrollen
- 1: Umfangsfläche
- 2: Aufnahme
- 3: Boden
- 4: Bohrung
- 5: Kraftübertragungselement
- 5a: Schaft
- 5b: Belastungsabsatz
- 5c: Stützabsatz
- 5d: Innengewinde
- 5e: Schraubabschnitt
- 6: Meßsensor
- 7: Abdeckung
- 7a: Außenfläche der Abdeckung 7
- 21: Körper
- 41: Körper
- 42: Nut
- 51: Ringdichtung

- Db: Durchmesser des Belastungsabsatzes 5b
- Di: Innendurchmesser der Aufnahme 2
- Ds: Durchmesser des Stützabsatzes 5c
- L: Längsachse der Aufnahme 2

## Patentansprüche

1. Vorrichtung zum Erfassen der Spannungsverteilung von durch Bandzug belasteten Metallbändern
- mit einer Meßrolle (10,20,30,31,32,40,50),
- mit mindestens einer in die Meßrolle (10,20,30,31,32,40,50) eingeformten Aufnahme (2),
- mit einem Meßsensor (6), der in der Aufnahme (2) sitzt,
- mit einem in der Aufnahme (2) steckenden Kraftübertragungselement (5), welches einen auf den Meßsensor (6) wirkenden Belastungsabsatz (5b), dessen Querschnittsfläche kleiner als die Querschnittsfläche der Aufnahme (2) ist, sowie einen Stützabsatz (5c) aufweist, der auf der der Außenseite der Meßrolle (10,20,30,31,32,40,50) zugeordneten Seite des Belastungsabsatzes (5b) ausgebildet ist und eine geringere Querschnittsfläche als der Belastungsabsatz (5b) besitzt, **gekennzeichnet durch**
- eine in die Öffnung der Aufnahme (2) eingepreßte und diese vollständig abdichtende Abdeckung (7), deren nach außen weisende Oberfläche im wesentlichen flächenbündig zur Umfangsfläche (8) Meßrolle (10,20,30,31,32,40,50) angeordnet ist und die an dem Stützabsatz (5c) des Kraftübertragungselements (5) abgestützt ist.

2. Vorrichtung nach Anspruch 1, **dadurch gekennzeichnet, daß** das Kraftübertragungselement (5) mit seinem einen Ende fest mit der Meßrolle (10,20,30,31,32,40,50) verbunden ist und an seinem anderen Ende den Belastungsabsatz (5b) aufweist.

3. Vorrichtung nach einem der Ansprüche 1 oder 2, **dadurch gekennzeichnet, daß** der Meßsensor (6) ringförmig ausgebildet ist.

4. Vorrichtung nach einem der voranstehenden Ansprüche, **dadurch gekennzeichnet, daß** das Kraftübertragungselement (5) einen Schaftabschnitt (5a) aufweist, dessen eines Ende fest mit der Meßrolle (10,20,30,31,32,40,50) verbunden ist.

5. Vorrichtung nach Anspruch 4, **dadurch gekennzeichnet, daß** der Belastungsabsatz (5b) als um den Schaftabschnitt (5a) umlaufender Kragen ausgebildet ist.

6. Vorrichtung nach einem der Ansprüche 3 bis 5, **dadurch gekennzeichnet, daß** der Meßsensor (6) und das Kraftübertragungselement (5) koaxial angeordnet sind und der Belastungsabsatz (5b) mit seiner von der Außenseite der Meßrolle (10,20,30,31,32,40,50) abgewandten Unterseite auf den Meßsensor (6) wirkt.

7. Vorrichtung nach einem der voranstehenden Ansprüche, **dadurch gekennzeichnet, daß** die feste Verbindung zwischen dem Kraftübertragungselement (5) und der Meßrolle (10,20,30,31,32,40,50) durch eine Schraubverbindung gebildet ist.

8. Vorrichtung nach einem der voranstehenden Ansprüche, **dadurch gekennzeichnet, daß** die Abdeckung (7) und das Kraftübertragungselement (5) einstückig ausgebildet sind.

9. Vorrichtung nach einem der Ansprüche 1 bis 7, **dadurch gekennzeichnet, daß** der Belastungsabsatz (5b), der Stützabsatz (5c) und die Abdeckung (7) einstückig einen Körper bilden, der über einen mit ihm lösbar verbundenen Schaft (5a) mit der Meßrolle (10,20,30,31,32,40,50) verkoppelt ist.

10. Vorrichtung nach einem der Ansprüche 1 bis 7, **dadurch gekennzeichnet, daß** die Abdeckung (7) und der Stützabsatz (5c) einstückig einen Körper bilden, der auf dem mit ihm lösbar verbundenen Schaft (5a) abgestützt ist.

11. Vorrichtung nach einem der voranstehenden Ansprüche, **dadurch gekennzeichnet, daß** das Kraftübertragungselement (5) und/oder die Abdeckung (7) Formelemente (42) aufweist, welche eine gerichtete Einleitung von auf die Abdeckung (7) wirkenden Kräften auf das Kraftübertragungselement (5) bewirken.

12. Vorrichtung nach einem der voranstehenden Ansprüche, **dadurch gekennzeichnet, daß** die Abdeckung (7) mindestens in ihrem über den Stützabsatz (5c) hinausstehenden Bereich eine im wesentlichen konstante Dicke aufweist.

13. Vorrichtung nach einem der Ansprüche 1 bis 11, **dadurch gekennzeichnet, daß** die Dicke der Abdeckung (7) in Richtung des Stützabsatzes (5c) zunimmt.

14. Vorrichtung nach einem der Ansprüche 1 bis 12, **dadurch gekennzeichnet, daß** die Dicke der Abdeckung (7) in Richtung des Stützabsatzes (5c) abnimmt.

15. Vorrichtung nach einem der voranstehenden Ansprüche, **dadurch gekennzeichnet, daß** zwischen dem Kraftübertragungselement (5) und der das Kraftübertragungselement (5) umgebenden Wandung der Aufnahme (2) ein Dichtelement (51) angeordnet ist, durch welches ein zwischen der Abdeckung (7) und dem Dichtelement (5) vorhandener Raum gegenüber dem Meßsensor (6) abgedichtet ist.

16. Vorrichtung nach einem der voranstehenden Ansprüche, **dadurch gekennzeichnet, daß** das Kraftübertragungselement (5) mindestens einen Abschnitt (5b) aufweist, der aus einem anderen Material besteht als der an ihn angrenzende Abschnitt des Kraftübertragungselements (5).

17. Vorrichtung nach einem der voranstehenden Ansprüche, **dadurch gekennzeichnet, daß** die Abdeckung (7) aus einem Werkstoff besteht, dessen Eigenschaften sich von den Eigenschaften des Werkstoffs unterscheiden aus dem der Schaft des das Kraftübertragungselement (5) gefertigt ist.

18. Vorrichtung nach einem der voranstehenden Ansprüche, **dadurch gekennzeichnet, daß** die Aufnahme (2) einen kreisförmigen Querschnitt besitzt.

19. Vorrichtung nach einem der voranstehenden Ansprüche, **dadurch gekennzeichnet, daß** die Abdeckung (7) mit dem Kraftübertragungselement mittels einer Preßverbindung verbunden ist.

## Claims

1. A device for detecting the stress distribution of metal strips stressed by tension of the strip
- comprising a measuring roller (10, 20, 30, 31, 32, 40, 50),
- comprising at least one receptacle (2) formed in the measuring roller (10, 20, 30, 31, 32, 40, 50),
- comprising a measuring sensor (6) which sits in the receptacle (2),
- comprising a force-transmitting element (5) fitted in the receptacle (2), which has a loading shoulder (5b) acting on the measuring sensor (6), said loading shoulder's (5b) cross-sectional area is smaller than the cross-sectional area of the receptacle (2), and which has a supporting shoulder (5c) which is constructed on the side of the loading shoulder (5b) associated with the outside of the measuring roller (10, 20, 30, 31, 32, 40, 50), and which has a smaller cross-sectional area than the loading shoulder (5b),
- **characterized by** a cover (7) which is pressed into the opening of the receptacle (2) and completely seals said receptacle, said cover's outwardly directed surface is arranged substantially flush to the circumferential surface (8) of the measuring roller (10, 20, 30, 31, 32, 40, 50) and which cover is supported on the supporting shoulder (5c) of the force-transmitting element (5).

2. The device according to claim 1, **characterised in that** the force-transmitting element (5) has one end fixedly connected to the measuring roller (10, 20, 30, 31, 32, 40, 50) and has the loading shoulder (5b) at its other end.

3. The device according to claim 1 or claim 2, **characterised in that** the measuring sensor (6) is constructed as ring-shaped.

4. The device according to any one of the preceding claims, **characterised in that** the force-transmitting element (5) has a shaft section (5a) whose one end is fixedly connected to the measuring roller (10, 20, 30, 31, 32, 40, 50).

5. The device according to claim 4, **characterised in that** the loading shoulder (5b) is constructed as a collar which encircles the shaft section (5a).

6. The device according to any one of claims 3 to 5, **characterised in that** the measuring sensor (6) and the force-transmitting element (5) are arranged coaxially and the loading shoulder (5b) acts on the measuring sensor (6) with its lower side facing away from the outside of the measuring roller (10, 20, 30, 31, 32, 40, 50).

7. The device according to any one of the preceding claims, **characterised in that** the fixed connection between the force-transmitting element (5) and the measuring roller (10, 20, 30, 31, 32, 40, 50) is formed by a screw connection.

8. The device according to any one of the preceding claims, **characterised in that** both the cover (7) and the force-transmitting element (5) are constructed in one piece.

9. The device according to any one of the claims 1 to 7, **characterised in that** the loading shoulder (5b), the supporting shoulder (5c) and the cover (7) integrally form a body which is coupled to the measuring roller (10, 20, 30, 31, 32, 40, 50) via a shaft (5a) detachably connected to the body.

10. The device according to any one of claims 1 to 7, **characterised in that** the cover (7) and the supporting shoulder (5c) integrally form a body which is supported on the shaft (5a) detachably connected to the body.

11. The device according to any one of the preceding claims, **characterised in that** the force-transmitting element (5) and/or the cover (7) have shaped elements (42) which bring about a directional introduction of forces acting on the cover (7) onto the force-transmitting element (5).

12. The device according to any one of the preceding claims **characterised in that** cover (7) has a substantially constant thickness at least in its region projecting over the supporting shoulder (5c).

13. The device according to any one of claims 1 to 11, **characterised in that** the thickness of the cover (7) increases in the direction of the supporting shoulder (5c).

14. The device according to any one of claims 1 to 12, **characterised in that** the thickness of the cover (7) decreases in the direction of the supporting shoulder (5c).

15. The device according to any one of the preceding claims, **characterised in that** between the force-transmitting element (5) and the wall of the receptacle (2) surrounding said force-transmitting element (5), there is a sealing element (51) by which means a space existing between the cover (7) and the sealing element (5) is sealed towards the measuring sensor (6).

16. The device according to any one of the preceding claims, **characterised in that** the force-transmitting element (5) has at least one section (5b) which consists of a different material than the section of the force-transmitting element (5) adjacent thereto.

17. The device according to any one of the preceding claims, **characterised in that** the cover (7) consists of a material whose properties differ from those of the material from which the shaft of the force-transmitting element (5) is made.

18. The device according to any one of the preceding claims, **characterised in that** the receptacle (2) has a circular cross-section.

19. The device according to any one of the preceding claims, **characterised in that** the cover (7) is connected to the force-transmitting element by means of a press connection.

## Revendications

1. Dispositif pour la détection de la répartition de la tension de bandes métalliques chargées par traction de la bande
- avec un rouleau de mesure (10, 20, 30, 31, 32, 40, 50),
- avec au moins un logement (2) formé dans le rouleau de mesure (10, 20, 30, 31, 32, 40, 50),
- avec un capteur de mesure (6) qui est installé dans le logement (2),
- avec un élément de transfert de force (5) qui, intégré dans le logement (2), présente un épaulement de mise en charge (5b), qui agit sur le capteur de mesure (6) et dont la section transversale est plus petite que la surface transversale du logement (2), ainsi qu'un épaulement d'appui (5c) qui est disposé sur le côté de l'épaulement de mise en charge (5b) associé au côté extérieur du rouleau de mesure (10, 20, 30, 31, 32, 40, 50), et présente une surface de section transversale plus faible que l'épaulement de mise en charge (5b),
**caractérisé en ce que**
- un recouvrement (7), qui est pressé dans l'ouverture du logement (2) pour boucher complètement celui-ci, et dont la surface dirigée vers l'extérieur est disposée sensiblement à niveau par rapport à la périphérie (8) du rouleau de mesure (10, 20, 30, 31, 32, 40, 50) et prend appui contre l'épaulement d'appui (5c) de l'élément de transfert de force (5).

2. Dispositif selon la revendication 1,
**caractérisé en ce que** l'élément de transfert de force (5) est relié par l'une de ses extrémités au rouleau de mesure (10, 20, 30, 31, 32, 40, 50) et présente à son autre extrémité l'épaulement de mise en charge (5b).

3. Dispositif selon l'une des revendications 1 ou 2, **caractérisé en ce que** le capteur de mesure (6) est conçu en forme d'anneau.

4. Dispositif selon l'une des revendications précédentes, **caractérisé en ce que** l'élément de transfert de force (5) présente un secteur en forme de tige (5a) dont l'une des extrémités est reliée fixement au rouleau de mesure (10, 20, 30, 31, 32, 40, 50).

5. Dispositif selon la revendication 4,
**caractérisé en ce que** l'épaulement de mise en charge (5b) est conçu en forme de col qui entoure la section de la tige (5a).

6. Dispositif selon l'une des revendications 3 à 5, **caractérisé en ce que** le capteur de mesure (6) et l'élément de transfert de force (5) sont disposés de manière coaxiale et que l'épaulement de mise en charge (5b) agit sur le capteur de mesure (6) avec son côté inférieur, dirigé à l'opposé au côté extérieur du rouleau de mesure (10, 20, 30, 31, 32, 40, 50).

7. Dispositif selon l'une des revendications précédentes, **caractérisé en ce que** la liaison fixe entre l'élément de transfert de force (5) et le rouleau de mesure (10, 20, 30, 31, 32, 40, 50) est réalisée au moyen d'un assemblage par vis.

8. Dispositif selon l'une des revendications précédentes, **caractérisé en ce que** le recouvrement (7) et l'élément de transfert de force (5) sont formés d'une seule pièce.

9. Dispositif selon l'une des revendications 1 à 7, **caractérisé en ce que** l'épaulement de mise en charge (5b), l'épaulement d'appui (5c) et le recouvrement (7) forment un corps d'une seule pièce, lequel est couplé avec le rouleau de mesure (10, 20, 30, 31, 32, 40, 50), par l'intermédiaire d'une tige (5a) auquel il est relié de manière amovible.

10. Dispositif selon l'une des revendications 1 à 7, **caractérisé en ce que** le recouvrement (7) et l'épaulement d'appui (5c) forment un corps d'une seule pièce qui prend appui sur la tige (5a) auquel il est relié de manière amovible.

11. Dispositif selon l'une des revendications précédentes, **caractérisé en ce que** l'élément de transfert de force (5) et / ou le recouvrement (7) présentent des éléments moulés (42) qui provoquent sur le l'élément de transfert de force (5) une initialisation dirigée des forces agissant sur le recouvrement (7).

12. Dispositif selon l'une des revendications précédentes, **caractérisé en ce que** le recouvrement (7) présente, au moins dans son secteur faisant saillie au-dessus de l'épaulement d'appui (5c), une épaisseur sensiblement constante.

13. Dispositif selon l'une des revendications 1 à 11, **caractérisé en ce que** l'épaisseur du recouvrement (7) augmente en direction de l'épaulement d'appui (5c).

14. Dispositif selon l'une des revendications 1 à 12, **caractérisé en ce que** l'épaisseur du recouvrement (7) diminue en direction de l'épaulement d'appui (5c).

15. Dispositif selon l'une des revendications précédentes, **caractérisé en ce que**, entre l'élément de transfert de force (5) et la paroi du logement (2), qui entoure l'élément de transfert de force (5), est disposé un élément d'étanchéité (51) au moyen duquel un espace, existant entre le recouvrement (7) et ledit élément d'étanchéité est étanché par rapport au capteur de mesure (6).

16. Dispositif selon l'une des revendications précédentes, **caractérisé en ce que** l'élément de transfert de force (5) présente au moins un secteur (5b) qui est fabriqué avec une autre matière que le secteur de l'élément de transfert de force (5) voisin de lui.

17. Dispositif selon l'une des revendications précédentes, **caractérisé en ce que** le recouvrement (7) est exécuté en matière plastique dont les propriétés diffèrent des propriétés de la matière utilisée à la fabrication de la tige de l'élément de transfert de force (5).

18. Dispositif selon l'une des revendications précédentes, **caractérisé en ce que** le logement (2) possède une section transversale en forme de cercle.

19. Dispositif selon l'une des revendications précédentes, **caractérisé en ce que** le recouvrement (7) est relié à l'élément de transfert de force au moyen d'un assemblage pressé.
